# EUROPÄISCHE PATENTSCHRIFT

(11) **EP 1 715 017 B1**
(45) Veröffentlichungstag und Bekanntmachung des Hinweises auf die Patenterteilung: **13.08.2008**
(21) Anmeldenummer: 06005920.1
(22) Anmeldetag: 23.03.2006
(51) Int. Cl.: C09J 175/04, C08G 18/79, C08G 18/69, B29C 65/14

(54) **Bei niedrigen Temperaturen mit Mikrowellen härtbare PU-Klebstoffe**
Low-temperature microwave-curable PU adhesives
Adhésifs polyuréthannes durcissables par micro-ondes à basse température

(30) Priorität: 18.04.2005 DE 102005017912
(43) Veröffentlichungstag der Anmeldung: 25.10.2006
(73) Patentinhaber: Henkel AG & Co. KGaA, 40589 Düsseldorf (DE); DCT Dry Control Technologies GmbH & Co. KG, 21107 Hamburg (DE)
(72) Erfinder: Rein, Manfred, 69493 Hirschberg (DE); Schrade, Karl-Wilhelm, 26133 Oldenburg (DE)

(56) Entgegenhaltungen:
- EP-A- 0 508 259
- WO-A-88/09712
- WO-A-94/18255
- WO-A-03/016369
- WO-A-03/076167

## Beschreibung

Gegenstand der Erfindung ist ein Verfahren zum Aushärten von einkomponentigen Kleb-/Dichtstoffen enthaltend oberflächendesaktivierte feste Polyisocyanate mit Hilfe einer Mikrowellenstrahlung, sowie die Verwendung dieses Verfahrens zum Kleben von Kunststoffsubstraten.

In der modernen industriellen Fertigung besteht häufig der Bedarf, Kunststoffsubstrate durch Kleben zu verbinden. Insbesondere für die Fahrzeugindustrie werden immer häufiger Bauteile und Module aus Kunststoffen hergestellt, beispielhaft erwähnt seien Lampengehäuse von Fahrzeugleuchten oder Fahrzeugscheinwerfern. Hier sind ältere Fügungsverfahren bekannt, bei denen ein Scheinwerfergehäuse ein U-förmiges Dichtungsbett an einer ersten Seitenwand aufweist, in das ein zweites Bauteil, beispielsweise eine Abschluss- bzw. Abdeckscheibe aus Glas, mit einer zweiten Seitenwand einfügbar ist, so dass beide Bauteile miteinander abdichtend verbunden sind. An die Stelle der Abschluss- bzw. Abdeckscheiben oder auch Streuscheiben aus Glas treten heute vielfach auch Scheiben aus Kunststoffsubstraten, beispielsweise aus Polymethylmethacrylat (PMMA) oder Polycarbonat (PC).

Viele Verklebungen von Kunststoffen werden heute mit 2-Komponenten-Produkten durchgeführt, die bei Raumtemperatur aushärten. Dies liegt häufig in der Tatsache begründet, dass die verwendeten Substrate bei hohen Temperaturen thermisch geschädigt werden und somit keinen Einsatz von Klebstoffen tolerieren, die diese Temperaturen zum Erreichen der Endfestigkeit zwingend erfordern. Die Aushärtung bei RT ist zwar substratschonend, dauert aber viel länger als die Hochtemperaturhärtung. Man kann die Problematik entschärfen, indem man 2K-Produkte mit kurzer Topfzeit verwendet. Diesen Vorteil erkauft man sich aber durch zusätzlichen Aufwand bei der Applikation (häufiger Wechsel von Statikmischern oder/und Ausspülen von gemischtem Material). Einen weiteren Fortschritt erzielt man, wenn nach dem Auftrag zumindest eine Handlingsfestigkeit durch einen Energiestoß erreicht werden kann, z.B. durch thermische Energie in einem Umluftofen oder durch Einsatz der Hot-Air-Technik oder aber durch Strahlungsenergie (z.B. Infrarotstrahler). Diese Maßnahmen lösen die zugrunde liegenden Probleme aber jeweils nur zum Teil und erfordern dafür einen teuren apparativen Aufwand. Günstiger für die Problemlösung wäre ein 1K-Produkt, welches substratschonend bei relativ niedrigen Temperaturen und zusätzlich in relativ kurzer Zeit nahezu seine vollständige Endfestigkeit erreicht.

1K-Polyurethane basierend auf mikroverkapseltem Isocyanat sind seit ca. 20 Jahren bekannt und in Form diverser Kleb- und Dichtstoffe für PKWs und Nutzfahrzeuge im Markt eingeführt. Stand der Technik ist dabei die Aushärtung dieser Produkte durch thermische Energie, z.B. in einem Umluftofen, den die Karosserien zur Trocknung/Aushärtung von Grundierungen, Füllern oder Lacken sowieso durchfahren müssen. In Einzelfällen kommt, meist bei Anbauteilen, auch die sogenannte Hot-Air-Technik zum Einsatz, bei der heiße Luft nur im Bereich von z.B. Klebenähten eingeblasen wird.

WO 03/076167 beschreibt ein Verfahren zum Verbinden von Formteilen mit wärmehärtbaren Klebstoffen durch Einstrahlung von elektromagnetischer Strahlung in die Klebefuge. Die Klebefuge soll dabei so gestaltet sein, dass das Substrat mindestens eines zu fügenden Formteils im Bereich der Klebefuge transparent für die elektromagnetische Strahlung, insbesondere Infrarotstrahlung, ist. Das Klebstoffvolumen der Klebefuge soll dann mit energiereicher Infrarotstrahlung (nahe Infrarotstrahlung (NIR)) bestrahlt werden. Als Klebstoff werden wärmehärtende Klebstoffe auf der Basis einer nicht wässrigen Dispersion, die mindestens ein nur an der Oberfläche desaktiviertes Polyisocyanat und wenigstens ein mit Isocyanat reaktives Polymer enthalten, vorgeschlagen. Nachteilig bei diesem Verfahren ist, dass die Klebefuge so konzipiert sein muß, dass mindestens eines der zu fügenden Formteile im Bereich der Klebefuge transparent für die IR-Strahlung sein muß. Ein weiterer Nachteil ist, dass die IR-Strahlung nicht nur den Klebstoff erwärmt, sondern sehr häufig auch dem Klebstoff nahe gelegene Bereiche der Bauteile.

Neben diesen klassischen Methoden hat sich die Aushärtung mittels Mikrowellenbestrahlung für Polyurethane als besonders vorteilhaft erwiesen, wenn durch Einsatz von für die Mikrowellenaushärtung geeigneten Rohstoffen sowie durch die Verwendung hochaktiver Katalysatoren günstige Bedingungen für diese Technik geschaffen werden. In diesem Fall ist es auch möglich, auf kritischen Untergründen, deren Benetzung auf Grund ihrer niedrigen Oberflächenspannung erschwert ist, gute und dauerhafte Haftung zu erzielen.

Es bestand also Bedarf, weitere Verfahren zum Verbinden von Formteilen aus Kunststoffen bereit zu stellen, die ein rasches Fügungs- und Fertigungsverfahren erlauben, zu einer dauerhaften Verklebung der Bauteile führen und die weniger abhängig von speziellen konstruktiven Einschränkungen in Bezug auf die Durchlässigkeit von aktivierender Strahlung sind.

Die erfindungsgemäße Lösung der Aufgabe ist den Patentansprüchen zu entnehmen, sie besteht im wesentlichen darin, ein Verfahren zum Aushärten von einkomponentigen Kleb-,/Dichtstoff-Zusammensetzungen bereit zu stellen, die durch Mikrowellenstrahlung aushärten.

Die Verwendung von Mikrowellenstrahlung zum Aushärten von Dicht- und Klebemitteln ist im Prinzip bekannt, so beschreibt EP 318542 B1 ein Verfahren zum zumindest teilweisen Aushärten von Dicht- und Klebemitteln, bei dem insbesondere bei der Direktverglasung von Kraftfahrzeugen das Dicht- und Klebemittel durch Einstrahlung von Mikrowellenenergie erwärmt wird. Dabei soll die Beaufschlagung mit Mikrowellenenergie örtlich begrenzt erfolgen und die Mikrowellenenergie soll impulsförmig in einer ersten und wenigstens einer weiteren Impulsgruppe eingestrahlt werden, deren Impulsamplituden jeweils vom Anfang bis zum Ende der Gruppe abnehmen und sie soll zwischen den Impulsgruppen dauerstrichartig eingestrahlt werden. Die Bindemittelbestandteile enthalten Isocyanat-funktionelle Umsetzungsprodukte von aromatischen Diisocyanaten im stöchiometrischen Überschuss mit einem Polyol. Als durch Erhitzen aktivierbares Vernetzungsmittel werden komplexierte Amine, insbesondere die Komplexverbindung aus Methylendianilin und Kochsalz vorgeschlagen. Als weitere Vernetzungsmittel schlägt dieses Dokument Polyamino- oder Polyhydroxy-funkionelle Verbindungen vor, welche mikroverkapselt sind und dadurch bei Raumtemperatur für eine Reaktion mit dem Isocyanat-Prepolymeren nicht zur Verfügung stehen. Derartige Vernetzungsmittel benötigen Materialtemperaturen oberhalb von 100°C, vorzugsweise zwischen 120 und 160°C zum Auslösen der Vernetzungsreaktion.

US 5,948,194 beschreibt ein Verfahren zum Auftragen von Klebstoffmaterial auf ein Substrat, das unmittelbar vor dem Auftrag auf das Substrat durch Mikrowellenenergie aufgeheizt worden ist. Dazu soll das Material unter Druck durch eine Auftragsröhre gefördert werden, die transparent für Mikrowellenenergie ist. Diese Röhre soll in dem Resonatorraum einer Mikrowellenkammer angeordnet sein. Die Mikrowellenenergie soll von einer Mikrowellenquelle mittels eines Wellenleiters zur Mikrowellenresonanzkammer geführt werden, wobei das Klebstoffmaterial beim Durchgang durch die Resonanzkammer an den radialen Grenzen der Auftragsröhre vernachlässigbar erhitzt wird. Das Klebstoffmaterial wird anschließend auf die zu fügende Komponente entlang eines vorbestimmten Weges aufgetragen. Dabei soll das Material entlang der aufgetragenen Klebstoffraupe auf unterschiedliche Temperaturen erhitzt werden. Angaben über Zusammensetzungen von Klebstoffen, die für dieses Verfahren geeignet sind, sind dem Dokument nicht zu entnehmen.

US 5,804,801 A beschreibt ein Verfahren zum erleichterten Kleben verschiedener Komponenten mit Mikrowellenenergie variabler Frequenz. Gemäß dieser Schrift wird die Aushärtezeit für polymere Klebstoffzusammensetzungen herabgesetzt, indem man die mit Hilfe des Klebstoffs zu fügenden Komponenten in eine Mikrowellen-Heizvorrichtung einbringt, die einer Mikrowellenstrahlung von variablen Frequenzen ausgesetzt wird. Dieses Verfahren soll zum gleichförmigen Erhitzen von verschiedenen leitfähige Fasern enthaltenden Artikeln dienen. Dabei kann die Mikrowellenenergie selektiv so orientiert werden, dass sie an den Randbereichen in die Artikel mit leitfähigen Fasern eintritt. Andere Randbereiche dieser Artikel können dann selektiv von der Mikrowelle abgeschirmt werden. Als zu verwendende Klebstoffe werden Epoxidharzklebstoffe offenbart.

EP 0720995 B1 beschreibt flüssige reaktive wärmehärtende Zusammensetzungen aus einem Polyepoxid, einem Anhydrid einer Di- oder Polycarbonsäure, sowie einem Katalysator, der unter Mikrowellen-Bestrahlung eine schnelle Polymerisation der Mischung aus Epoxid und Anhydrid bewirkt.

WO 02/12405 beschreibt ein Verfahren zur beschleunigten Klebstoffaushärtung unter Verwendung von Klebstoffzusammensetzungen, die nanoskalige Teilchen mit ferro-, ferrimagnetischen, superparamagnetischen oder piezoelektrischen Eigenschaften enthalten, die unter Einwirkung eines elektrischen oder magnetischen oder elektromagnetischen Wechselfeldes so erwärmt werden, dass bei reaktiven Klebstoffen die Bindemittelmatrix auf eine Temperatur erwärmt wird, die die Vernetzung der Bindemittelmatrix über die reaktiven Gruppen des Bindemittels bewirkt. Als elektromagnetische Strahlung zur Erwärmung der Klebstoffzusammensetzung über die nanoskaligen Teilchen schlägt diese Schrift niederfrequente Bereiche von etwa 50 kHz bis hinauf zu etwa 100 MHZ vor.

EP 1327844 A2 beschreibt ein Verfahren und eine Vorrichtung zur Härtung, Vernetzung und/oder Trocknung von Beschichtungsstoffen und/oder Substraten und eine neue Verwendung eines Mikrowellenofens, das / die sich durch die Verwendung von Mikrowellen mit mindestens zwei Wellenlängen auszeichnet.

Der Gegenstand der vorliegenden Erfindung betrifft ein Verfahren zum Aushärten von einkomponentigen Kleb-/Dichtstoffen enthaltend oberflächendesaktivierte, bei Raumtemperatur feste Polyisocyanate mit Hilfe von Mikrowellenstrahlung, das so beschaffen ist, dass sich die Kleb-/Dichtstoffzusammensetzung makroskopisch nur auf eine Temperatur unterhalb der Aufdicktemperatur erwärmt.

Die "Aufdicktemperatur" im Sinne dieser Erfindung ist die Temperatur, auf die eine bei Raumtemperatur lagerstabile, oberflächendesaktiviertes Isocyanat enthaltende Zusammensetzung kurzfristig, das heißt bis zu einer Stunde, erhitzt werden muss, um eine Polyadditionsreaktion und somit eine Vernetzung zu erzielen. Die Polyadditionsreaktion bzw. Vernetzung wird dabei durch ein signifikantes "Aufdicken", das heißt durch die Verfestigung des Materials, erkannt. Im Sinne dieser Erfindung kann die Aufdicktemperatur dadurch bestimmt werden, dass die zu prüfende Zusammensetzung in einen Ofen mit voreingestellter Temperatur eingebracht wird und die Konsistenz der Zusammensetzung in Abhängigkeit von Zeit und Temperatur geprüft wird. Eine weitere Möglichkeit besteht durch Auftrag einer Materialraupe auf eine sogenannte Koflerbank, das heißt eine Fläche, die einen definierten Temperaturgradienten aufweist. Hierbei lässt sich die Aufdicktemperatur als Grenze zwischen pastösem und vernetztem Material definieren. Die einfachste Bestimmungsmethode ist eine Viskositätsmessung bei definiert ansteigender Temperatur der Messplatte. In diesem Fall definiert sich die Aufdicktemperatur als derjenige Wert, den man abliest, wenn man den nach dem Einsetzen der Aushärtungsreaktion nahezu senkrecht ansteigenden Ast der Viskositätskurve auf die Temperaturachse verlängert.

Als "Materialtemperatur" für die nach dem erfindungsgemäßen Verfahren mit Mikrowellenstrahlung erwärmte Kleb-/Dichtstoffzusammensetzung wird dabei die Temperatur verstanden, die auf der Oberfläche der Zusammensetzung bei offenliegenden Klebstoffraupen (1 cm breit, 0,5 cm hoch) unmittelbar nachdem Verlassen der Mikrowellenbestrahlung gemessen wird.

In einer bevorzugten Ausführungsform des erfindungsgemäßen Verfahrens wird die auf die Klebstoffzusammensetzung einwirkende Mikrowelleneinstrahlung so gesteuert, dass im Sinne der vorgenannten Definition Materialtemperaturen zwischen 40°C und 120°C erreicht werden, vorzugsweise soll die Materialtemperatur zwischen 50 und 70°C sein.

Als "Mikrowellen" im Sinne dieser Erfindung werden elektromagnetische Strahlen im Frequenzbereich zwischen 300 MHz und 300 GHz verstanden, das heißt also elektromagnetische Strahlen, die zwischen dem Hochfrequenzbereich der Rundfunkwellen und der Infrarotstrahlung liegen. Insbesondere umfasst der Bereich der "Mikrowellenstrahlung" im Sinne dieser Erfindung den Bereich der Dezimeterwellen mit Frequenzen zwischen 300 MHz und 3 GHz und der Zentimeterwellen mit Frequenzbereichen zwischen 3 GHz und 30 GHz, er kann jedoch auch den Bereich der Millimeterwellen zwischen 30 GHz und 300 GHz mit umfassen.

Die bevorzugten Ausführungsformen des erfindungsgemäßen Verfahrens sehen ein Einstrahlen auf die Kleb-/Dichtstoffzusammensetzung mit Mikrowellen mit mindestens zwei Wellenlängen vor, wobei die mindestens zwei Wellenlängen der Mikrowellen durch Einschalten von Mikrowellen erzeugenden Mikrowellenquellen generiert werden, dabei wird das Einschalten gegebenenfalls periodisch vorgenommen und die Energie der eingestrahlten Mikrowellen wird vorzugsweise in Abhängigkeit von der erfassten Kleb-/Dichtstofftemperatur und/oder dem Aushärtungszustand des Polyurethan-Bindemittelsystems gesteuert.

Mit fortschreitender Aushärtung des Bindemittelsystems nimmt der Anteil der aus der bestrahlten Klebefuge reflektierten Mikrowellenenergie zu, so dass die eingestrahlte Energie durch einen geeigneten Regelkreis reduziert werden muß, um Überhitzungen zu vermeiden. Um eine möglichst vollständige Aushärtung des in der Klebefuge befindlichen Kleb-/Dichtstoffes unter möglichst schonenden Bedingungen zu erzielen, muß sicher gestellt werden, dass die Abstrahlung der Mikrowellenenergie so erfolgt, dass das gesamte Klebstoffvolumen von der Mikrowellenenergie so erreicht wird, dass die Vernetzungsreaktion ausgelöst werden kann.

Dabei kann das mit dem Kleb-/Dichtstoff versehene Substrat nacheinander durch Zonen geführt werden, die mit Mikrowellen bestrahlt werden, die eine identische Grundfrequenz, bevorzugt von etwa 2,5 GHz aufweisen und die mit unterschiedlichen Modulationsfrequenzen, bevorzugt mit etwa 900 MHz, etwa 1,2 GHz, etwa 1,6 GHz, etwa 1,9 GHz, etwa 2,2 GHz, etwa 2,5 GHz und/oder etwa 3 GHz moduliert sind.

Vorrichtungen, die sich für das erfindungsgemäße Verfahren zum Kleben von Kunststoffbauteilen mit Hilfe von einkomponentigen Kleb-/Dichtstoffen enthaltend oberflächendesaktivierte feste Polyisocyanate eignen, sind beispielsweise in der EP 1327844 A2 beschrieben. Die Offenbarung dieser Schrift in Bezug auf die Ausgestaltung der Vorrichtungen ist ausdrücklich Bestandteil des vorliegenden Verfahrens.

Bei kleinteiligen zu fügenden Bauteilen bzw. bei kleinflächigen Klebefugen lassen sich die Vorrichtungen für das erfindungsgemäße Verfahren zum Kleben von Kunststoffbauteilen auch so gestalten, dass der Mirkowellenstrahler gemeinsam mit einer Auftragsvorrichtung des Klebstoffes an einem Arm eines Roboters entlang der zu fügenden, mit Klebstoff versehenen Substratbereiche geführt wird, so dass sich das Verfahren weitgehend automatisieren lässt.

Die festen, oberflächendesaktivierten Polyisocyanate, die in den nach dem erfindungsgemäßen Verfahren eingesetzten Kleb-/Dichtstoffen verwendet werden, haben vorzugsweise einen Schmelzpunkt oberhalb von 40°C. Insbesondere eigenen sich hierzu die nachfolgend aufgeführten Polyisocyanate:
Diphenylmethan-4,4'-diisocyanat (MDI), Naphthalin-1,5-diisocyanat (NDI), 3,3'-Dimethyl-biphenyl-4,4'-diisocyanat (TODI), dimeres 1-Methyl-2,4-phenylen-diisocyanat (TDI-U), 3,3'-Diisocyanato-4,4'dimethyl-N,N'-diphenylharnstoff (TDIH), das Isocyanurat des IPDI (IPDI-T) oder das Additionsprodukt von 2 Mol 1-Methyl-2,4-phenylen-Diisocyanat mit 1 Mol 1,2-Ethandiol, 1,4-Butandiol, 1,4-Cyclohexandi-methanoloder Ethanolamin.

Die Oberflächendesaktivierung dieser festen, pulverförmigen Polyisocyanate erfolgt dabei in an sich bekannter Weise durch Dispergieren des pulverförmigen Polyisocyanates in einer Lösung oder Dispersion eines Desaktivierungsmittels.

Die festen Polyisocyanate sollten bevorzugt pulverförmig mit einem mittleren Teilchengrössendurchmesser von kleiner oder gleich 10 µm vorliegen (Gewichtsmittel). Sie fallen im Regelfall bei der Synthese als Pulver mit der geforderten Teilchengrösse von 10 µm oder weniger an, andernfalls müssen die festen Polyisocyanate (vor der Desaktivierungsreaktion) durch Mahlprozesse und/oder Siebprozesse in den erfindungsgemäßen Teilchenbereich gebracht werden. Die Verfahren sind Stand der Technik.

Alternativ können die pulverförmigen Polyisocyanate durch eine der Oberflächendesaktivierung nachgeschalteten Nassmahlung und Feindispergierung auf eine mittlere Teilchengröße von gleich oder weniger als 10 µm gebracht werden. Hierfür eignen sich Dispergiergeräte von Rotor-Stator Typ, Rührwerkskugelmühlen, Perl- und Sandmühlen, Kugelmühlen und Reibspaltmühlen. Je nach Polyisocyanat und Verwendung erfolgt die Vermahlung des desaktivierten Polyisocyanats in Gegenwart des Desaktivierungsmittels oder im nichtreaktiven Dispergiermittel mit nachfolgender Desaktivierung. Das gemahlene und oberflächenstabilisierte Polyisocyanat lässt sich auch aus den Mahl-Dispersionen abtrennen und ggf. trocknen. Das Verfahren ist in EP 204 970 beschrieben.

Die Oberflächendesaktierungsreaktion kann auf verschiedenen Wegen durchgeführt werden:
- Durch Dispersion des pulverförmigen Isocyanats in einer Lösung des Desaktivierungsmittels.
- Durch Eintragen einer Schmelze eines niederschmelzenden Polyisocyanats in eine Lösung des Desaktivierungsmittels in einem nichtlösenden flüssigen Dispersionsmittel.
- Durch Zugabe des Desaktivierungsmittels oder einer Lösung desselben, zur Dispersion der festen feinteiligen Isocyanate.

Die festen Polyisocyanate werden vorzugsweise durch Einwirkung von primären und sekundären aliphatischen Mono-, Di- oder Polyaminen, Hydrazinderivaten, Amidinen, Guanidinen, desaktiviert. Bewährt haben sich Ethylendiamin, 1,3-Propylendiamin, Diethylentriamin, Triethylentetramin, 2,5-Dimethylpiperazin, 3,3'-Dimethyl-4',4'-diamino-dicyclohexylmethan, Methylnonan-diamin, Isophorondiamin, 4,4'-Diaminodicyclohexylmethan, Diamino- und Triamino-polypropylenether, Polyamidoamine (auch Polyaminoamide genannt), und Gemische von Mono-, Di- und Polyaminen. Weiterhin eignen sich Aminoalkylalkoxysilane, wie beispielsweise das 3-Aminopropyltriethoxysilan oder die entsprechenden Alkyldialkyloxysilane oder andere Aminoalkylalkoxysilane sowie aminofunktionelle Polybutadiene oder Polyisoprene. Ganz besonders bevorzugt sind die vorgenannten aminoterminierten Polypropylenglycole, Polyethylenglycole oder Copolymere von Propylenglycol und Ethylenglycol. Es können auch Mischungen der vorgenannten Desaktivierungsmittel verwendet werden.

Die Konzentration des Desaktivierungsmittels soll 0,1 bis 20, bevorzugt 0,5 bis 8 Equivalentprozent betragen, bezogen auf die total vorhandenen Isocyanatgruppen.

Das Bindemittel der Mikrowellen-härtbaren Kleb- / Dichtstoffe enthält dabei Polyole wie z.B. Polyetherpolyole, Polyesterpolyole, Polyacrylatpolyole, Polyolefinpolyole und / oder Polyetheresterpolyole, Polyetheramine, substituierte aromatische Diamine und ein feinteiliges, festes Di- oder Polyisocyanat, das während der Dispergierung im Polyol- / Polyamin-Gemisch an seiner Oberfläche desaktiviert wird.

Zusätzlich zu den vorgenannten Bestandteilen enthält der Kleb- / Dichtstoff in aller Regel Füllstoffe, ggf. pulverförmiges Molekularsieb oder andere wasserbindende Bestandteile, sowie Katalysatoren.

Als Polyole können dabei eine Vielzahl von höhermolekularen Polyhydroxyverbindungen verwendet werden. Als Polyole eignen sich vorzugsweise die bei Raumtemperatur flüssigen Polyether mit zwei bzw. drei Hydroxylgruppen pro Molekül im Molekulargewichts-Bereich von 400 bis 30000, vorzugsweise im Bereich von 1000 bis 15000. Beispiele sind di- und/oder trifunktionelle Polypropylenglycole, es können auch statistische und/oder Blockcopolymere des Ethylenoxids und Propylenoxids eingesetzt werden. Eine weitere Gruppe von vorzugsweise einzusetzenden Polyethern sind die Polytetramethylenglycole (Poly(oxytetramethylen)glycol, Poly-THF), die z.B. durch die saure Polymerisation von Tetrahydrofuran hergestellt werden. Dabei liegt der Molekulargewichts-Bereich der Polytetramethylenglycole zwischen 200 und 6000, vorzugsweise im Bereich von 800 bis 5000.
Weiterhin sind als Polyole die flüssigen, glasartig amorphen oder kristallinen Polyester geeignet, die durch Kondensation von Di- bzw. Tricarbonsäuren, wie z.B. Adipinsäure, Sebacinsäure, Glutarsäure, Azelainsäure, Korksäure, Undecandisäure, Dodecandisäure, 3,3-Dimethylglutarsäure,Terephthalsäure, Isophthalsäure, Hexahydrophthalsäure, Dimerfettsäuren oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-Dodecandiol, Dimerfettalkohol, Glycerin, Trimethylolpropan oder deren Mischungen hergestellt werden können.
Eine weitere Gruppe der erfindungsgemäß einzusetzenden Polyole sind die Polyester auf der Basis von ε-Caprolacton, auch "Polycaprolactone" genannt.
Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie vorzugsweise Rizinusöl und dessen Derivate und /oder Hydroxy-funktionelle Polybutadiene, wie sie z.B. unter dem Handelsnamen "Poly-bd" erhältlich sind, können für die erfindungsgemäßen Zusammensetzungen als Polyole eingesetzt werden. Neben den vorgenannten hydroxy-funktionellen Polybutadienen können auch hydroxy-funktionelle Polyisoprene sowie die entsprechenden hydroxyfunktionellen Copolymeren des Butadiens oder Isoprens mit Styrol sowie die Hydrierungsprodukte der hydroxy-funktionellen Polybutadiene, Polyisoprene oder deren Copolymeren eingesetzt werden.

Weiterhin eignen sich als Polyole lineare und/oder schwach verzweigte Acrylester-Copolymer-Polyole, die beispielsweise durch die radikalische Copolymerisation von Acrylsäureestern, bzw. Methacrylsäureestern mit Hydroxy-funktionellen Acrylsäure- und/ oder Methacrylsäure-Verbindungen wie Hydroxyethyl-(meth)acrylat oder Hydroxypropyl(meth)acrylat hergestellt werden können. Wegen dieser Herstellungsweise sind die Hydroxylgruppen bei diesen Polyolen in der Regel statistisch verteilt, so daß es sich hierbei entweder um lineare oder schwach verzweigte Polyole mit einer durchschnittlichen OH-Funktionalität handelt. Die hydroxy-funktionelle Bindemittelkomponente kann auch Mischungen eines oder mehrere der vorgenannten Polyole enthalten.
Als di- oder trifunktionelle aminoterminierte Polymere können bevorzugt aminoterminierte Polyalkylenglycole, insbesondere die difunktionellen aminoterminierten Polypropylenglycole, Polyethylenglycole oder Copolymere von Propylenglycol und Ethylenglycol eingesetzt werden. Diese sind auch unter dem Namen "Jeffamine" (Handelsname der Firma Huntsman) bekannt. Weiterhin sind geeignet die difunktionellen aminoterminierten Polyoxytetramethylenglycole, auch Poly-THF genannt. Außerdem sind difunktionelle aminoterminierte Polybutadienverbindungen als Aufbaukomponenten geeignet sowie Aminobenzoesäureester von Polypropylenglycolen, Polyethylenglycolen oder Poly-THF (bekannt unter dem Handelsnamen "Versalink oligomeric Diamines" der Firma Air Products). Die aminoterminierten Polyalkylenglycole oder Polybutadiene haben Molekulargewichte zwischen 400 und 6000.

Ebenso können auch substituierte aromatische Diamine, die z.B. unter dem Handelsnamen Lonzacure (Lonza) oder Unilink (UOP) bekannt sind, verwendet werden.

Als Füllstoffe werden vorzugsweise Kreiden, natürliche gemahlene oder gefällte Calciumcarbonate, Calciummagnesiumcarbonate (Dolomit), Silicate wie z. B. Aluminiumsilicate, Schwerspat oder Magnesiumaluminiumsilicate oder auch Talkum eingesetzt. Weiterhin können ggf. andere Füllstoffe, insbesondere verstärkende Füllstoffe wie Ruße, ausgewählt aus der Gruppe der Flammruße, Channelruße, Gasruße oder Furnaceruße oder deren Mischungen mit verwendet werden. Zusätzlich können die Kleb-/Dichstoffe gemäß vorliegender Erfindung Weichmacher bzw. Weichmachermischungen sowie Katalysatoren, Stabilisatoren und weitere Hilfs- und Zusatzstoffe enthalten.

Als Katalysatoren geeignet sind tertiäre Amine, insbesondere aliphatische Amine cyclischer Struktur. Unter den tertiären Aminen sind auch solche geeignet, die zusätzlich noch gegenüber den Isocyanaten reaktive Gruppen tragen, insbesondere Hydroxyl- und/oder Aminogruppen. Konkret genannt seien: Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanolhexylamin, Diethanolcydohexylamin, Diethanolphenylamin sowie deren Ethoxylierungs- und Propoxylierungs-Produkte, Diaza-bicyclo-octan (DABCO), Triethylamin, Dimethylbenzylamin (Desmorapid DB, BAYER), Bisdimethylaminoethylether (Calalyst A 1, UCC), Tetramethylguanidin, Bisdimethylaminomethyl-phenol, 2-(2-Dimethylaminoethoxy)ethanol, 2-Dimethylaminoethyl-3-dimethylaminopropylether, Bis(2-dimethylaminoethyl)ether, N,N-Dimethylpiperazin, N-(2-hydroxyethoxyethyl)-2-azanorbornane, oder auch ungesättigte bicyclische Amine, z. B. Diazabicycloundecen (DBU) sowie Texacat DP-914 (Texaco Chemical), N,N,N,N-Tetramethylbutan-1,3-diamin, N,N,N,N-Tetramethylpropan-1,3-diamin und N,N,N,N-Tetramethylhexan-1,6-diamin.

Als Katalysatoren können ebenfalls die in der Polyurethan-Chemie üblichen und bekannten metallorganischen Verbindungen eingesetzt, wie z.B. Eisen- oder auch insbesondere Zinn- oder Bismut- Verbindungen. Konkrete Beispiele hierfür sind 1,3-Dicarbonyl-Verbindungen des Eisens wie Eisen (III)acetylacetonat sowie insbesondere die zinnorganischen Verbindungen des 2- bzw. 4-wertigen Zinns, hier insbesondere die Sn(II)-Carboxylate bzw. die Dialkyl-Sn(IV)-Dicarboxylate oder die entsprechenden Dialkoxylate wie z.B. Dibutylzinndilaurat, Dibutylzinndiacetat, Dimethylzinndineodecanoat, Dioctylzinndiacetat, Dibutylzinnmaleat, Zinn(II)-Octoat, Zinn(II)-Phenolat oder auch die Acetylacetonate des 2- bzw. 4-wertigen Zinns. Gegebenenfalls können auch Mischungen der vorgenannten tertiären Amine mit den metallorganischen Verbindungen als Katalysatoren eingesetzt werden.

Zur Herstellung von spezifisch leichten Kleb- / Dichtstoffen können auch Leichtfüllstoffe anteilig mitverwendet werden, beispielhaft genannt seien Kunststoffmikrohohlkugeln ("Microspheres"), vorzugsweise in vorexpandierter Form. Derartige Mikrohohlkugeln können entweder in der vorgeschäumten Form als Mikrohohlkugeln direkt dem Kleb- / Dichtstoff zugesetzt werden oder die "Mikrohohlkugeln" werden als feinteiliges Pulver in der ungeschäumten Form dem Kleb- / Dichtstoff zugesetzt. Diese Mikrohohlkugeln enthalten ein flüssiges Treibmittel auf der Basis von aliphatischen Kohlenwasserstoffen oder Fluorkohlenwasserstoffen als Kern und eine Schale aus einem Copolymer aus Acrylnitril mit Vinylidenchlorid und/oder Methylmethacrylat und/oder Methacrylnitril. Beim Einsatz derartiger ungeschäumter Microspheres erfolgt die Expansion der Microspheres und damit das Schäumen erst während des Aushärteprozesses des Kleb- / Dichtstoffs. Diese Vorgehensweise ergibt so eine sehr gleichmäßige und feinporige Schäumung. Die Verwendung derartiger Microspheres ist beispielsweise in der EP-A-559254 beschrieben. Derartige "Mikrohohlkugeln" sind z.B. unter dem Handelsnamen "Expancel" der Fa. Nobel Industries oder als "Dualite" von der Firma Pierce & Stevens im Handel erhältlich.

Zusätzlich können noch Zusätze zur Regelung des Fließverhaltens zugesetzt werden, beispielhaft erwähnt seinen Harnstoffderivate, fibrillierte oder Pulpkurzfasern, pyrogene Kieselsäuren und dergleichen.

Obwohl die erfindungsgemäß zu verwendenden Kleb- / Dichtstoffe vorzugsweise keine Weichmacher enthalten, kann es gelegentlich notwendig sein, an sich bekannte Weichmacher mit zu verwenden. Hierzu können Dialkylphthalate, Dialkyladipate, Dialkylsebacate, Alkylarylphthalate, Alkylbenzoate, Dibenzoate von Polyolen, wie Ethylenglycol, Propylenglycol oder den niederen Polyoxypropylen- oder Polyoxyethylenverbindungen, Anwendung finden. Weitere geeignete Weichmacher können Alkylphosphate, Arylphosphate oder Alkylarylphosphate sowie Alkysulfonsäureester des Phenols oder auch paraffinfische oder naphthenische Öle oder entaromatisierte Kohlenwasserstoffe als Verdünner sein. Wichtig ist bei der Mitverwendung von Weichmachern, daß diese so ausgewählt werden, daß sie die Oberflächendesaktivierungsschicht der desaktivierten feinteiligen Polyisocyanate während der Lagerung des Kleb- / Dichtstoffes nicht angreifen weil sie dadurch eine vorzeitige Aushärtung des Kleb- / Dichtstoffes hervorrufen würden.

Durch die erfindungsgemäße Wahl geeigneter Strahlungsfrequenzen lassen sich verschiedene Vorteile realisieren:
1. Strahlungsenergie wird bevorzugt oder ausschließlich vom Klebstoff absorbiert. Die Substrate werden nur indirekt über Wärmeleitung erwärmt und bleiben dadurch deutlich kälter als im Fall der Ofenhärtung.
2. Durch die vollständige Absorption der eingestrahlten Energie direkt im Klebstoff erfolgt die Aushärtung wesentlich schneller als im Ofen, besonders dann, wenn Klebstoffe zwischen 2 Substraten ausgehärtet werden müssen. Aushärtezeiten von weniger als 10 Minuten sind im Ofen kaum zu realisieren. Im Fall der Mikrowellenaushärtung sind unter günstigen Voraussetzungen weniger als zwei, im Idealfall weniger als eine Minute ausreichend.

Überraschenderweise wurde darüber hinaus gefunden, dass die Aushärtetemperaturen der Polyurethane gegenüber der Ofenhärtung signifikant niedriger liegen. Differenzen von 10°C und mehr bei der Oberflächentemperatur wurden gefunden, wenn die Werte unmittelbar nach Verlassen der Energiequelle bestimmt wurden. Die Messwerte direkt nach Abschalten des Mikrowellenfeldes waren auch deutlich niedriger als die durch Messung der sogenannten Aufdicktemperatur bestimmten Laborwerte.

Das erfindungsgemäße Verfahren zum Aushärten von einkomponentigen Kleb-/Dichtstoffen eignet sich insbesondere zum Kleben von Kunststoff-Substraten. Besonders bevorzugt kann dieses Verfahren zum Kleben von Kunststoffbauteilen im Fahrzeugbau eingesetzt werden, beispielhaft erwähnt seien hier An- und Einbauteile wie Dachmodule, Kofferraumdeckel, Türteile sowie Scheinwerferbauteile.

Nachfolgend wird das erfindungsgemäße Verfahren anhand von einigen Beispielen näher erläutert.

### Beispiele

### Beispiel 1

In einem Rührgefäß werden 10 g Rizinusöl, 220 g OH-terminiertes Polybutadien (z.B. Liquiflex H) und 264 g eines Prozessöls (z.B. Nytex 840) gemischt. Anschließend werden folgende Additive eingerührt:
1 g Aminopropyltrimethoxysilan,
1 g Dimethylzinncarboxylat (Fomrez UL-28),
1,5 g 2-Methyl-2-azanorbornan (Dabco AN10) und
2,5 g Polyoxypropylentriamin (Jeffamin T403).

Danach werden folgende Feststoffe im Vakuum homogen eindispergiert :
30 g Molekularsiebpulver,
15 g Kieselsäure,
5 g Farbruß,
410 g oberflächenbehandelte Kreide.
Im letzten Schritt werden unter Vakuum 40g dimeres Toluylendiisocyanat
(Metalink U) homogen eingerührt. Man erhält eine pastöse Masse mit einer Aufdicktemperatur von ca. 80°C.

Das Produkt wurde auf Eignung zum Kleben von Scheinwerfersubstraten getestet. Dazu wurden Prüfkörper aus Polypropylen und Polycarbonat verwendet, eine Raupe des Klebstoffs gemäß Beispiel 1 wurde auf das Polypropylenteil aufgetragen, das Polycarbonatteil wurde darauf gefügt. Anschließend wurden die so gefügten Teile durch einen Mikrowellentunnel geführt, in dem eine Mikrowellengrundstrahlung niedriger Energie von 2,45 GHz mit einer darauf aufmodulierten zweiten Frequenz von 1,6 GHz zur Verfügung stand. Nach ca. 2 Minuten war die Aushärtung zwischen den beiden Kunststoffteilen (Verklebung von PP mit PC) erfolgt.

Zur Bestimmung der Oberflächentemperatur wurden offen liegende Raupen unter denselben Bedingungen ausgehärtet. Die unmittelbar nach dem Verlassen des Mikrowellentunnels gemessene Temperatur betrug 68°C. Im Ofen war das Produkt nach 15 Minuten bei 78°C ausgehärtet, bei niedrigeren Temperaturen blieb die Masse pastös.

## Patentansprüche

1. Verfahren zum Aushärten von einkomponentigen Kleb-/Dichtstoffen enthaltend oberflächendesaktivierte feste Polyisocyanate **dadurch gekennzeichnet, dass** die Kleb-/Dichtstoffe einer Mikrowellenstrahlung ausgesetzt werden, wobei sich die Kleb-/Dichtstoffzusammensetzung auf eine Material-Temperatur unterhalb der Aufdicktemperatur erwärmt.

2. Verfahren nach Anspruch 1, **dadurch gekennzeichnet, dass** die Klebstoffzusammensetzung unmittelbar nach Ende der Mikrowelleneinstrahlung eine Materialtemperatur zwischen 40°C und 120°C, vorzugsweise zwischen 50°C und 70°C aufweist.

3. Verfahren nach Anspruch 1 oder 2 **dadurch gekennzeichnet, dass** die Klebstoffzusammensetzung mit Mikrowellen mit mindestens zwei Wellenlängen gleichzeitig bestrahlt wird.

4. Verfahren nach mindestens einem der vorhergehenden Ansprüche **dadurch gekennzeichnet, dass** die mindestens zwei Wellenlängen der Mikrowellen durch Einschalten von Mikrowellen erzeugenden Mikrowellenquellen erzeugt werden, wobei das Einschalten ggf. periodisch vorgenommen wird.

5. Verfahren nach einem der vorstehenden Ansprüche, wobei die Energie der eingestrahlten Mikrowellen in Abhängigkeit von der erfassten Kleb-/Dichtstofftemperatur und/oder dem Aushärtungszustand des Polyurethanbindemittelsystems gesteuert wird.

6. Verfahren nach einem der vorstehenden Ansprüche, wobei das mit dem Kleb-/Dichtstoff versehene Substrat nacheinander durch Zonen geführt wird, die mit Mikrowellen bestrahlt werden, die eine identische Grundfrequenz, bevorzugt von etwa 2,5 Gigahertz, aufweisen und mit unterschiedlichen Modulationsfrequenzen, bevorzugt mit etwa 1.2 Gigahertz, etwa 1.6 Gigahertz, etwa 1.9 Gigahertz, etwa 2.1 Gigahertz, etwa 2.5 Gigahertz und/oder etwa 3 Gigahertz moduliert sind.

7. Verfahren nach mindestens einem der vorhergehenden Ansprüche, **dadurch gekennzeichnet, dass** das feste, oberflächendesaktivierte Polyisocyanat einem Schmelzpunkt oberhalb 40°C aufweist.

8. Verfahren nach Anspruch 7, **dadurch gekennzeichnet, dass** das Polyisocyanat ausgewählt wird aus Diphenylmethan-4,4'-diisocyanat (MDI), Naphthalin-1,5-diisocyanat (NDI), 3,3'-Dimethyl-biphenyl-4,4'-diisocyanat (TODI), dimeres 1-Methyl-2,4-phenylen-di-isocyanat (TDI-U), 3,3'-Diisocyanato-4,4'dimethyl-N,N'-diphenylharnstoff (TDIH), dem Isocyanurat des IPDI (IPDI-T) oder dem Additionsprodukt von 2 Mol 1-Methyl-2,4-phenylen-Diisocyanat mit 1 Mol 1,2-Ethandiol, 1,4-Butandiol, 1,4-Cyclohexan-di-methanol, oder Ethanolamin.

9. Verfahren nach Anspruch 7 oder 8, **dadurch gekennzeichnet, dass** die Oberflächendesaktivierung des Polyisocyanates durch Dispergieren des pulverförmigen Polyisocyanates in einer Lösung oder Dispersion eines Desaktivierungsmittels erfolgt.

10. Verfahren nach Anspruch 9, **dadurch gekennzeichnet, dass** als Desaktivierungsmittel niedermolekulare flüssige Polyamine, Polyamidoamine, Polyoxyalkylenamine, Aminoalkylalkoxysilane oder deren Mischungen verwendet werden.

11. Verfahren nach mindestens einem der vorhergehenden Ansprüche **dadurch gekennzeichnet, dass** die Kleb-/Dichtstoffzusammensetzung als Bindemittelkomponente hydroxyfunktionelle native Öle und/oder hydroxyfunktionelle Polyene ausgewählt aus hydroxyfunktionellen Polybutadienen, hydroxyfunktionellen Polyisoprenen, hydroxyfunktionellen Copolymeren aus Butadien, Isopren und Styrol, oder deren Hydrierungsprodukten enthält.

12. Verwendung des Verfahrens nach mindestens einem der vorhergehenden Ansprüche zum Kleben von Kunststoff-Substraten, insbesondere von Scheinwerferbauteilen.

## Claims

1. Process for curing one-component adhesives/sealants comprising surface deactivated solid polyisocyanates, wherein the adhesive/sealants are exposed to microwave radiation, the adhesive/sealant composition being heated to a material temperature below the thickening temperature.

2. Process according to claim 1, wherein immediately after the end of the microwave irradiation, the adhesive composition has a material temperature between 40 °C and 120°C, preferably between 50 °C and 70 °C.

3. Process according to claim 1 or 2, wherein the adhesive composition is simultaneously irradiated with microwaves of at least two wavelengths.

4. Process according to at least one of the previous claims, wherein the at least two wavelengths of the microwaves are generated by switching on microwave producing microwave sources, the switching on being optionally periodic.

5. Process according to one of the previous claims, wherein the energy of the irradiated microwaves is controlled as a function of the resulting adhesive/sealant temperature and/or the state of cure of the polyurethane binding agent system.

6. Process according to one of the previous claims, wherein the substrate provided with the adhesive/sealant is successively conveyed through zones that are irradiated with microwaves having an identical fundamental frequency, preferably about 2.5 Gigahertz, and which are modulated with different modulation frequencies, preferably with about 1.2 Gigahertz, about 1.6 Gigahertz, about 1.9 Gigahertz, about 2.1 Gigahertz, about 2.5 Gigahertz and/or about 3 Gigahertz.

7. Process according to at least one of the previous claims, wherein the solid, surface deactivated polyisocyanate has a melting point above 40 °C.

8. Process according to claim 7, wherein the polyisocyanate is selected from diphenylmethane-4,4'-diisocyanate (MDI), naphthalene-1,5-diisocyanate (NDI), 3,3'-dimethyl-biphenyl-4,4'-diisocyanate (TODI), dimeric 1-methyl-2,4-phenylene diisocyanate (TDI-U), 3,3'-diisocyanato-4,4'-dimethyl-N,N'-diphenylurea (TDIH), the isocyanurate of IPDI (IPDI-T) or the addition product of 2 moles 1-methyl-2,4-phenylene diisocyanate with 1 mole 1,2-ethanediol, 1,4-butanediol, 1,4-cyclohexanedimethanol or ethanolamine.

9. Process according to claim 7 or 8, wherein the surface deactivation of the polyisocyanates is carried out by dispersing the powdered polyisocyanates in a solution or dispersion of a deactivation agent.

10. Process according to claim 9, wherein low molecular weight liquid polyamines, polyamidoamines, polyoxyalkyleneamines, aminoalkyl alkoxysilanes or their mixtures are employed as deactivation agents.

11. Process according to at least one of the previous claims, wherein the adhesive/sealant composition comprises hydroxy-functional natural oils and/or hydroxy-functional polyenes selected from hydroxy-functional polybutadienes, hydroxy-functional polyisoprenes, hydroxy-functional copolymers of butadiene, isoprene and styrene, or their hydrogenated products as the binding agent component.

12. Use of the process according to at least one of the previous claims to adhesively join plastic substrates, particularly headlight components.

## Revendications

1. Procédé pour le durcissement de substances adhésives/d'étanchéité à un seul composant contenant des polyisocyanates solides désactivés en surface, **caractérisé en ce que** les substances adhésives/d'étanchéité sont exposées à un rayonnement micro-ondes par lequel la composition de la substance adhésive/d'étanchéité se réchauffe à une température de la matière qui est inférieure à la température d'épaississement.

2. Procédé selon la revendication 1, **caractérisé en ce que** la composition de la substance adhésive, directement après la fin de l'irradiation micro-ondes, présente une température de la matière entre 40 °C et 120 °C, de préférence entre 50 °C et 70 °C.

3. Procédé selon la revendication 1 ou 2, **caractérisé en ce que** la composition de la substance adhésive est irradiée de manière simultanée avec des micro-ondes possédant au moins deux longueurs d'ondes.

4. Procédé selon au moins une des revendications précédentes, **caractérisé en ce que** lesdites au moins deux longueurs d'ondes des micro-ondes sont générées par l'activation de sources de micro-ondes générant des micro-ondes, l'activation étant mise en oeuvre en cas de nécessité de manière périodique.

5. Procédé selon une des revendications précédentes, **caractérisé en ce que** l'énergie des micro-ondes irradiées est réglée en fonction de la température enregistrée de la substance adhésive/d'étanchéité et/ou de l'état de durcissement du système de liant à base de polyuréthane.

6. Procédé selon une des revendications précédentes, **caractérisé en ce que** le substrat muni de la substance adhésive/d'étanchéité est guidé successivement à travers des zones qui sont irradiées avec des micro-ondes, lesdites zones présentant une fréquence de base identique, de préférence d'environ 2,5 GHz, et est soumis à une modulation avec des fréquences de modulation différentes, de préférence avec des fréquences d'environ 1,2 GHz, d'environ 1,6 GHz, d'environ 1,9 GHz, d'environ 2,1 GHz, d'environ 2,5 GHz et/ou d'environ 3 GHz.

7. Procédé selon au moins une des revendications précédentes, **caractérisé en ce que** le polyisocyanate solide, désactivé en surface présente un point de fusion supérieur à 40 °C.

8. Procédé selon la revendication 7, **caractérisé en ce que** le polyisocyanate est choisi parmi le diphénylméthane-4,4'-diisocyanate (MDI), le naphtalène-1,5-düsocyanate (NDI), le 3,3'-diméthyl-biphényl-4,4'-diisocyanate (TODI), le 1-méthyl-2,4-phénylène-diisocyanate dimère (TDI-U), la 3,3'-diisocyanato-4,4'-diméthyl-N,N'-diphénylurée (TDIH), l'isocyanurate du IPDI (IPDI-T) ou le produit d'addition de 2 mol du 1-méthyl-2,4-phénylène-diisocyanate avec 1 mol du 1,2-éthanediol, du 1,4-butanediol, du 1,4-cyclohexane-diméthanol ou de l'éthanolamine.

9. Procédé selon la revendication 7 ou 8, **caractérisé en ce que** la désactivation superficielle du polyisocyanate a lieu par la mise en dispersion du polyisocyanate pulvérulent dans une solution ou dans une dispersion d'un agent de désactivation.

10. Procédé selon la revendication 9, **caractérisé en ce qu'**on utilise, pour faire office d'agent de désactivation, des polyamines liquides à bas poids moléculaire, des polyamidoamines, des polyoxyalkylènamines, des aminoalkylalcoxysilanes ou leurs mélanges.

11. Procédé selon au moins une des revendications précédentes, **caractérisé en ce que** la composition de la substance adhésive/d'étanchéité contient, à titre de composant faisant office de liant, des huiles naturelles à fonctionnalité hydroxyle et/ou des polyènes à fonctionnalité hydroxyle, qui sont choisis parmi des polybutadiènes à fonctionnalité hydroxyle, des polyisoprènes à fonctionnalité hydroxyle, des copolymères de butadiène, d'isoprène et de styrène, à fonctionnalité hydroxyle, ou encore leurs produits d'hydrogénation.

12. Utilisation du procédé selon au moins une des revendications précédentes pour le collage de substrats en matières synthétiques, en particulier de pièces de projecteurs.
